# FASCICULE DE BREVET EUROPEEN

(11) **EP 2 069 846 B1**
(45) Date de publication et mention de la délivrance du brevet: **25.07.2012**
(21) Numéro de dépôt: 07816173.4
(22) Date de dépôt: 04.10.2007
(51) Int. Cl.: G02B 6/50, H02G 1/08, G02B 6/44

(54) **DISPOSITIF DE POSE D'UN CABLE**
KABELVERLEGUNGSEINRICHTUNG
CABLE LAYING DEVICE

(30) Priorité: 06.10.2006 CH 15932006
(43) Date de publication de la demande: 17.06.2009
(73) Titulaire: Plumettaz S.A., 1880 Bex (CH)
(72) Inventeur: CHERIX, Michel, 1872 Troistorrents (CH); BLANCHET, Patrice, 1912 Leytron (CH)
(74) Mandataire: Vigand, Philippe
(86) Numéro de dépôt international: PCT/CH2007/000488
(87) Numéro de publication internationale: WO 2008/040140

(56) Documents cités:
- EP-A- 0 292 037
- WO-A-95/23988
- US-A- 5 169 126

## Description

La présente invention concerne un dispositif utilisé pour la pose de câbles ou autres éléments longilignes, notamment de câbles ou éléments de faible diamètre et plus particulièrement de câbles à fibres optiques posés selon la technique de poussage ou de portage-poussage.

La pose d'un câble dans un tube selon cette dernière technique connue se fait généralement par injection d'un fluide dans le tube, le fluide étant injecté avec une vitesse supérieure à la vitesse de pose du câble, des moyens mécaniques disposés en amont de l'injection de fluide étant prévus pour pousser le câble à l'intérieur du tube. Par cette technique il est courant de poser des câbles, notamment des câbles à fibres optiques de grandes longueurs.

Cette technique souffre cependant d'un inconvénient provenant de l'encombrement et de la masse du dispositif comprenant les moyens permettant d'injecter le fluide de portage ainsi que ceux de poussage. Cet inconvénient est particulièrement apparent lors d'une pose où le lieu d'introduction du câble est situé dans un espace confiné ou lorsque l'extrémité du tube devant recevoir le câble débouche à proximité immédiate d'une paroi latérale de la chambre d'introduction ou lors de la pose de câbles à fibres optiques de faible diamètre et relativement fragiles.

Le dispositif décrit dans US-5.749.565 décrit un tel dispositif particulièrement mal adapté à une pose lorsque le tube devant recevoir la fibre optique se trouve proche de la paroi gauche de la chambre d'introduction.

Le document WO 95/23989 décrit un outil de pose de fibre optique.

Afin d'éviter cet inconvénient, l'invention propose donc un dispositif de pose d'un câble ou autre élément longiligne tel que décrit dans la revendication 1, des variantes ou autres formes d'exécution étant décrites dans les revendications dépendantes.

Une forme d'exécution préférentielle d'un dispositif selon l'invention est décrite ci-dessous, accompagnée de la description de quelques variantes d'exécution, cette description étant à considérer en regard du dessin annexé comprenant les figures où :
la figure 1 représente une vue en perspective d'un dispositif de pose selon l'invention en position de fonctionnement selon une première disposition,
la figure 2 représente une vue éclatée montrant les divers éléments constitutifs d'une cassette d'introduction,
la figure 3 représente une vue en perspective du même dispositif, que celui de la figure 1, la cassette d'introduction étant séparée du corps d'entraînement,
la figure 4 représente une vue arrière du corps d'entraînement,
la figure 5 représente le même dispositif que celui de la figure 1 selon une autre disposition,
la figure 6 représente un dispositif comprenant deux corps d'entraînement, et
les figures 7A et 7B représentent un dispositif de sécurité d'arrachage monté sur le corps d'entraînement.

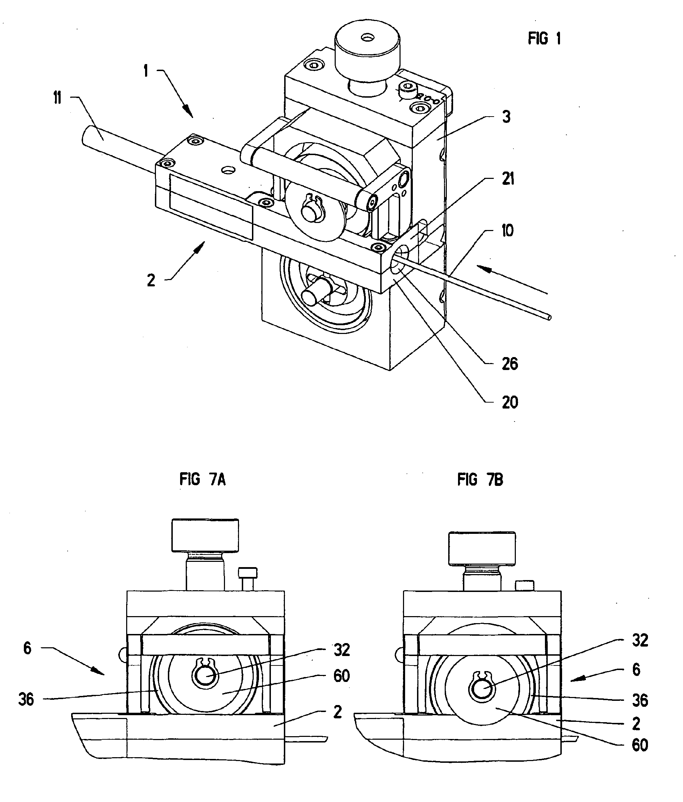

Sur la figure 1 on distingue un dispositif de pose selon l'invention 1, destiné à poser un câble ou autre élément 10, ici une fibre optique, dans un tube 11. La fibre optique 10 provient d'un tambour ou autre dispositif de stockage, non représenté sur la figure, et est introduite par l'orifice 26 et est poussée dans le tube 11 dans la direction de la flèche par le dispositif de pose 1.

Le dispositif de pose 1 selon l'invention est constitué essentiellement d'une cassette d'introduction 2 et d'un corps d'entraînement 3.

La cassette d'introduction 2 comprend une première portion 20 et une seconde portion 21, les deux dites portions étant assemblées, comme on le voit à la figure 1 pour la pose.

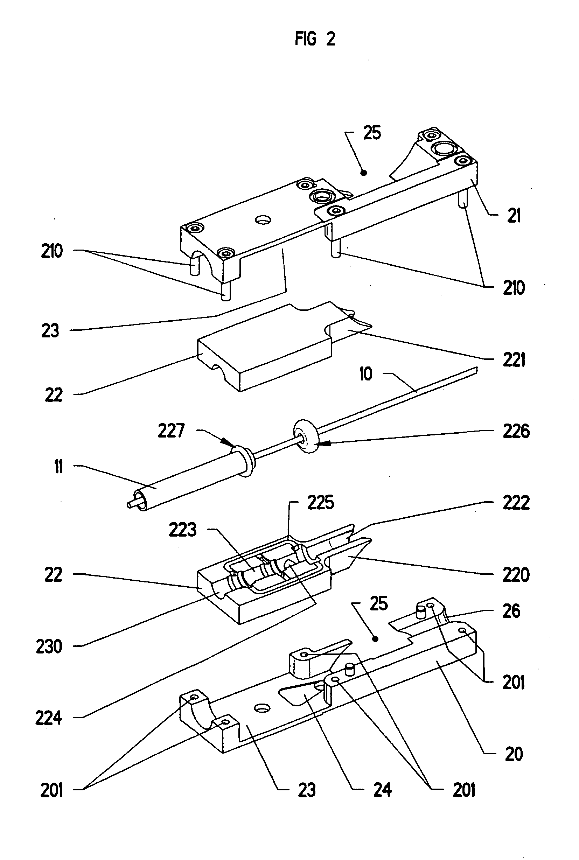

La figure 2 montre en détail là constitution d'une cassette d'introduction 2. Cette casette d'introduction 2 comprend essentiellement quatre éléments : une première portion 20, une seconde portion 21, un insert 22, lui-même comprenant une section inférieure 220 et une section supérieure 221.

Considérant tout d'abord l'insert 22 et sa section inférieure 220, on voit que cette dernière comprend une portion de rainure longitudinale 222 servant à guider la fibre 10 à l'entrée de l'insert 22. L'autre côté de la section inférieure 220 comprend un logement 230 permettant de recevoir et fixer l'extrémité du tube 11. Les diamètres de la rainure 222 ainsi que du logement 230 devant recevoir le tube 11 sont choisis selon les diamètres propres de la fibre et du tube 11.

Vu que pour certains cas de pose on injecte un fluide sous pression dans le tube 11 simultanément à l'introduction de la fibre, l'insert 22 comprend une chambre d'introduction de fluide dont une portion 223 est visible sur la figure. Cette chambre d'introduction de fluide 223 est disposée entre la portion de rainure 222 et le logement 230, ces trois éléments étant alignés selon l'axe longitudinal de l'insert 22. La chambre d'introduction de fluide 223 est reliée par un orifice 224 à une chambre d'alimentation de fluide 24 creusée dans la première portion 20 de la cassette d'introduction 2. L'étanchéité contre les fuites du fluide est assurée par un joint corde 225 disposé dans une gorge périphérique de la chambre d'introduction de fluide 223, ainsi que par un joint à lèvre 226 assurant l'étanchéité côté fibre et un joint torique 227 assurant l'étanchéité côté tube, ces trois joints étant disposés dans des logements adaptés de la section inférieure 220.

La section supérieure 221 de l'insert 22 est semblable à la section inférieure 220 qui vient d'être décrite si ce n'est qu'elle ne comporte pas d'orifice 224 mettant en liaison la chambre d'introduction de fluide avec l'extérieur et que des logements ne sont prévus que pour les joints d'étanchéité 226 et 227.

Les deux portions 20 et 21 d'une cassette d'introduction 2 sont semblables, si ce n'est que l'une des portions, par exemple la seconde portion 21 comprend des tiges d'assemblage 210 alors que la première portion 20 comprend des trous borgnes correspondants 201. Chacune des portions 20 et 21 comprend une portion d'un logement 23 permettant de recevoir l'insert 22 lorsqu'il est assemblé.

Lorsque les deux portions 20 et 21 de la cassette d'introduction 2 sont assemblées, celle-ci présente un dégagement ou une échancrure latérale 25 aménagé en amont du logement 23 sur une portion de la longueur de la cassette 2 permettant le couplage et le fonctionnement du corps d'entraînement 3 comme on le verra plus bas. De même la cassette d'introduction 2 présente une ouverture d'introduction 26 en liaison directe avec la rainure 222 de l'insert 22.

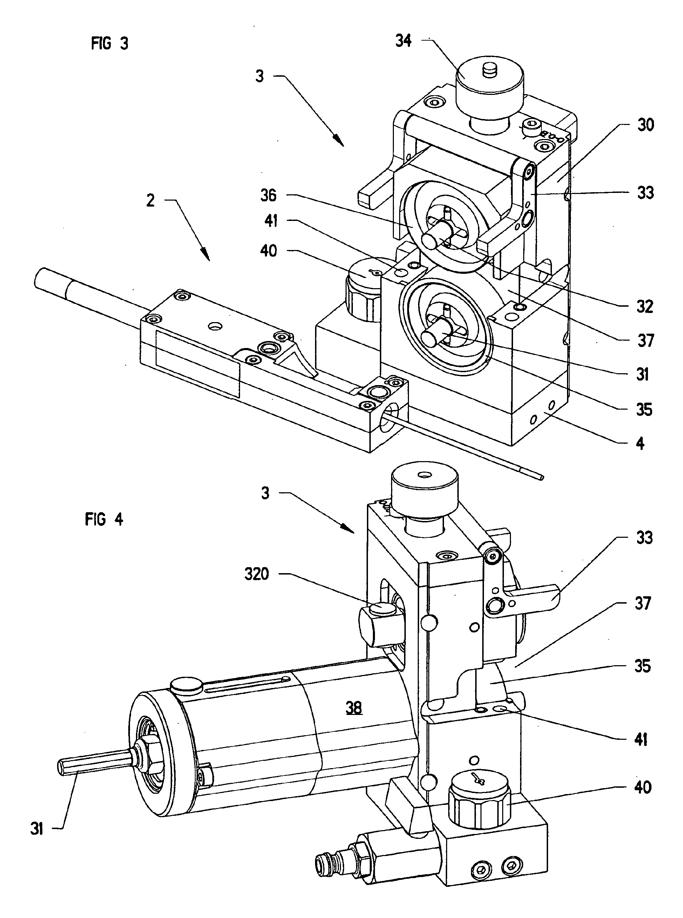

La figure 3, montre en détail la constitution du corps d'entraînement 3 selon une forme d'exécution particulière disposé à côté d'une cassette d'introduction 2. Ce corps d'entraînement 3 comprend un bâti 30 et deux axes parallèles 31 et 32, l'axe 31 se prolongeant vers l'arrière du corps 3, comme on le voit sur la figure 4, pour recevoir des moyens d'entraînement en rotation qui seront décrits plus loin. L'axe 32 est monté de manière coulissante sur une portion mobile, de manière à ce que la distance entre les axes 31 et 32 puisse être réglée par la vis de réglage 34 selon le diamètre du câble ou de l'élément à poser, de manière à ce que l'axe de l'élément à poser reste approximativement coaxial à l'axe central longitudinal du dispositif. Chacun des axes 31 et 32 porte une roue 35, respectivement 36. La roue 35, directement entraînée par l'axe motorisé 31 est donc une roue motrice alors que la roue 36 sert de roue d'appui. L'une ou chacune desdites roues peut porter un bandage périphérique relativement mou assurant l'intégrité du câble ou de l'élément à poser, ledit bandage pouvant porter une rainure périphérique adaptée au diamètre de l'élément à poser. De préférence chacune des roues 35, 36 est montée sur son axe respectif de manière à pouvoir rapidement être changée.

Le corps 30 du corps d'entraînement 3 comprend un logement ouvert 37, disposé entre les deux roues 35 et 36 et destiné à recevoir la cassette d'introduction 2.

On distingue encore sur la figure 3 un levier de verrouillage de cassette 33, représenté ici en position relevée et dont l'usage sera décrit plus bas.

On distingue en outre sur cette figure un dispositif d'alimentation en fluide de portage 4 fixé sous le corps d'entraînement 3 et pouvant comprendre un manomètre 40. Ce dispositif est relié d'un côté à une unité d'alimentation en fluide non représentée sur les figures et d'autre part à une canalisation 41 traversant la partie inférieure du bâti 30 pour déboucher sur un orifice ouvert dans le logement 37. Lorsque le corps d'entraînement 3 est monté sur la cassette d'introduction 2, comme on le voit à la figure 1, l'orifice de la canalisation 41 est en liaison avec la chambre d'alimentation en fluide 24 creusés dans la première portion 20 de la cassette d'introduction 2, reliée elle-même, comme mentionné précédemment avec l'orifice 224 de la chambre d'introduction de fluide 223, permettant ainsi d'injecter le fluide de portage dans le tube 11.

Les figures 1, 2 et 3 montrent un premier avantage du dispositif de pose 1 selon l'invention relativement aux dispositifs de l'art antérieur connus. On voit qu'il est possible d'assembler tout d'abord les deux sections 20 et 21 de l'insert 2 en posant la fibre 10, munie du joint 226, dans la rainure 222 ainsi que l'extrémité du tube 11, munie du joint 227 dans son logement 230 de la portion inférieure 20 puis en y superposant la portion supérieure 21 de manière à constituer l'insert 22. Autour de cet insert 22, on assemble les deux portions 20 et 21 de la cassette d'introduction 2. Cette opération ne mettant en action que du matériel léger et peu encombrant peut facilement être réalisée dans n'importe quel endroit malcommode et peu accessible. De préférence les éléments constitutifs de la cassette d'introduction 2 sont réalisés en métal léger, par exemple en aluminium.

Une fois cette opération initiale effectuée on introduit le corps d'entraînement 3 autour de la cassette d'introduction 2, de manière à ce que les roues 35 et 36 soient disposées de chaque côté du câble ou de l'élément longiligne 10 à poser dans le dégagement 25,puis on règle la distance entre les axes 31 et 32, respectivement entre les roues 35 et 36 selon le diamètre du câble ou de l'élément 10 à introduire dans le tube 11, de manière à compléter le dispositif de pose 1, comme on le voit à la figure 1. On abaisse alors le levier de verrouillage 33 fixant ainsi la cassette 2 dans le corps d'entraînement 3.

La figure 4 montre un corps d'entraînement 3 vu depuis sa face arrière et montrant un détail des moyens d'entraînement en rotation de l'axe 31. Cet axe 31, portant d'un côté la roue d'entraînement 35 comme décrite plus haut, se prolonge de l'autre côté du corps d'entraînement et peut porter avantageusement un limiteur de couple 38, réglable ou fixe, permettant de limiter le couple transmis à la roue 35, respectivement à la fibre en cours de pose. Sur cet axe 31 sortant du limiteur de couple 38, on peut monter n'importe quel moyen idoine d'entraînement en rotation, ce moyen, non représentés sur la figure pouvant être un entraînement manuel ou un entraînement motorisé, pneumatique, hydraulique ou électrique, par exemple une perceuse électrique connectée à l'axe 31, ce moyen d'entraînement en rotation pouvant en outre comprendre un dispositif de changement de sens de rotation, de réduction ou de renvoi d'angle.

On voit en particulier sur la figure 4 que les moyens d'entraînement en rotation prennent une place non négligeable sur le côté arrière du corps d'entraînement 3.

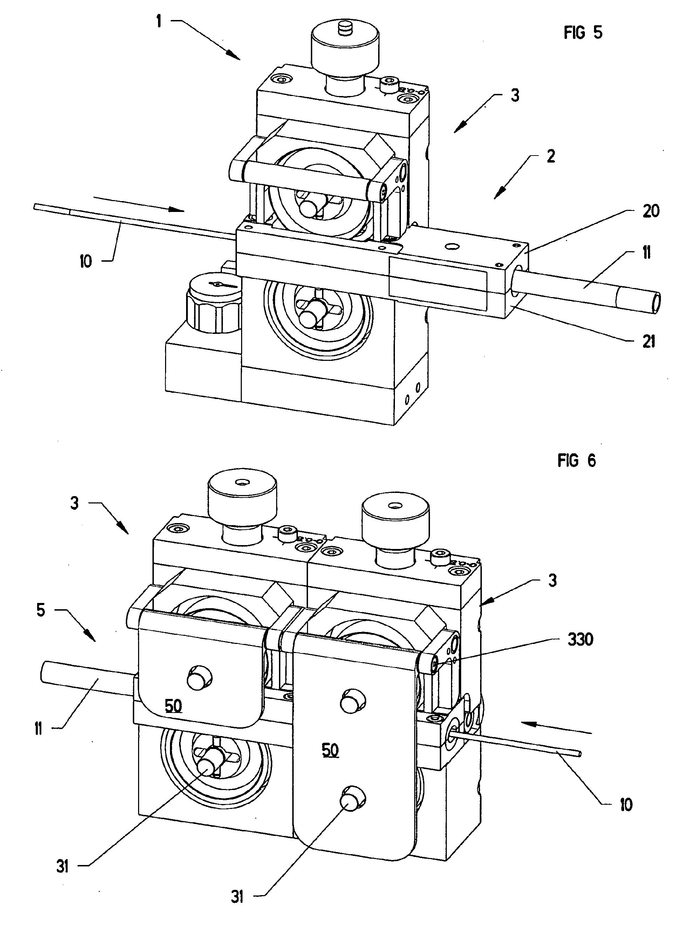

Un autre avantage déterminant du dispositif de pose 1 selon l'invention est visible en comparant les figures 1 et 5. Sur la figure 1, on voit que le dégagement 25 de la cassette d'introduction 2, visible sur la figure 2, est disposé pour recevoir le corps d'entraînement 3 par la droite de la cassette, selon le sens de passage de la fibre, les moyens d'entraînement étant alors disposés de ce côté de droite. A l'opposé, sur la figure 5, vu que la cassette d'introduction 2 est symétrique relativement à la face séparant ses deux portions 20 et 21, elle a été montée de manière à ce que le corps d'entraînement 3 soit disposé sur son côté gauche relativement au sens de passage de la fibre, les moyens d'entraînement étant alors aussi disposés de ce côté. Ainsi, si le tube 10 devant recevoir la fibre est disposé proche de la paroi de gauche de la chambre d'introduction, on montera le dispositif de pose 1 comme représenté sur la figure 1, c'est-à-dire avec les moyens d'entraînement en rotation sur la droite alors que si ce tube 10 est disposé proche de la paroi de droite de la chambre d'introduction, on montera le dispositif de pose 1 comme représenté sur la figure 5, c'est-à-dire avec les moyens d'entraînement en rotation sur la gauche.

La figure 4 montre encore un moyen de mesure de la vitesse et de la longueur de pose comprenant un aimant permanent 320 monté de manière décentrée sur l'un des axes, ici l'axe 32. Couplé à un capteur correspondant ainsi qu'à une unité électronique de mesure, non représenté sur la figure, ce moyen de mesure permet donc de contrôler en permanence la vitesse ainsi que la longueur de fibre ou de câble posé. L'unité de mesure peut être disposée directement sur le dispositif de pose 1 ou alors être reportée à distance.

Des variantes d'exécution de la cassette d'introduction 2 ainsi que du corps d'entraînement 3 peuvent être envisagées, certaines de ces variantes n'étant pas représentées sur les figures.

La cassette d'introduction 2 a été représentée comprenant un seul orifice d'entrée 26, l'insert 22 ne comprenant qu'une seule rainure de guidage 222. Dans le cas de la pose de fibres optiques en particulier, on peut avoir une cassette d'introduction 2 comprenant plusieurs orifices d'entrées 26, l'insert comportant plusieurs rainures 222, toutes convergeant vers l'entrée du tube 11, de manière à poser simultanément plusieurs fibres optiques 11.

De même, le corps de pose 3 a été représenté comportant un dispositif de fourniture et d'alimentation en fluide de portage 4 sur la portion inférieure. Pour certains cas de pose où on peut s'abstenir de fluide de portage, il ne sera pas nécessaire de monter ce dernier dispositif. Dans certains cas de pose, seul un lubrifiant peut être introduit dans le tube 11 simultanément à l'élément à poser 10.

Dans les cas où il est nécessaire, le fluide de portage peut être un fluide sec, par exemple de l'air comprimé sec ou alors un fluide lubrifié, par exemple de l'air comprimé chargé d'un lubrifiant.

Pour des éléments à poser relativement lourds et/ou rigides, il est possible de prévoir une cassette d'introduction 2 comprenant deux dégagements 25 successifs pour recevoir deux corps d'entraînement 3 successifs comme représenté à la figure 6. De préférence un seul des axes 31 est directement entraîné, l'autre axe 31 étant entraîné via une courroie de synchronisation.

En variante, la cassette 2 peut comprendre un dégagement 25 nettement plus important, le corps d'entraînement comprenant alors deux chenilles d'entraînement au lieu des deux roues 35 et 36.

Plutôt qu'un réglage de la position du seul axe 31, relativement à l'axe central longitudinal du dispositif, on peut aussi avoir des moyens de réglage symétriques et simultanés de l'écartement des deux axes 31 et 32.

La figure 6 montre en outre un dispositif de sécurité 5 comprenant dans cette variante d'exécution du dispositif de pose 1 deux volets 50 rabattables autour d'un axe, par exemple un axe 330 du dispositif de verrouillage de cassette 33 et aptes à cacher l'une ou les deux roues 35, 36 de manière à protéger les doigts de l'utilisateur lors de la pose.

Les figures 7A et 7B montrent un dispositif de sécurité d'arrachage de cassette 6 constitué essentiellement d'un disque 60 monté en bout de l'axe 32. Comme on le voit à la figure 7A, l'axe 32 est relevé, le disque 60 libérant le passage pour l'introduction ou le retrait de la cassette 2. Sur la figure 7B, l'axe 32 a été abaissé pour rapprocher les deux roues 35, 36, comme mentionné plus haut pour la pose de la fibre, abaissant de ce fait le disque 60 devant la cassette 2, de manière à empêcher son retrait. Ce dispositif 6 permet donc notamment de s'assurer que les deux roues 35, 36 ont bien été éloignées l'une de l'autre avant de retirer la cassette 2, de manière à ne pas arracher la fibre lors de cette opération.

Un dispositif de pose selon l'invention peut donc, par sa constitution en deux éléments séparés, être plus facilement installé, notamment dans les chantiers de pose peu accessibles. De par la constitution symétrique de la cassette d'introduction 2, on peut monter le corps d'entraînement 3 d'un côté ou de l'autre de ladite cassette, de manière à pouvoir s'adapter à la disposition de la fouille ou de la chambre d'introduction.

## Revendications

1. Dispositif de pose d'un élément longiligne (10) par introduction dans un tube (11), comprenant des moyens d'introduction (26) et de guidage (222), des moyens mécaniques de poussée (35, 36) dudit élément longiligne dans ledit dispositif, ainsi que des moyens d'introduction (223) dudit élément longiligne dans ledit tube, les moyens d'introduction (26) et de guidage (222), les moyens d'introduction (223) dudit élément longiligne dans ledit tube sont constitués en une cassette (2) alors que les moyens mécaniques de poussée (35,36) font partie d'un corps d'entraînement (3), ladite cassette (2) et ledit corps d'entraînement (3) étant constitués en deux éléments indépendants aptes à être assemblés pour la pose dudit élément longiligne, **caractérisé en ce que** la cassette (2), constituée de deux portions semblables (20,21) est symétrique relativement à un plan central contenant l'axe longitudinal par lequel passe ledit élément longiligne (10) et séparant les deux dites portions (20,21), ladite cassette présentant une échancrure latérale (25) pour le montage du corps d'entraînement (3), la cassette (2) étant ainsi apte à être installée sur l'élément à poser ayant son échancrure latérale (25) disposée sur la gauche ou sur la droite de l'élément à poser relativement au sens de passage dudit élément à poser, le corps d'entraînement (3) étant apte à être monté du côté de la cassette où se situe ladite échancrure.

2. Dispositif de pose selon la revendication 1 , **caractérisé en ce que** le corps d'entraînement (3) comprend en outre des moyens de fourniture et d'alimentation en fluide de portage (4), alimentant une chambre d'alimentation de fluide (24) aménagée dans ladite cassette (2).

3. Dispositif de pose selon la revendication 2, **caractérisé en ce que** la cassette (2) comprend un insert (22) comportant une section inférieure (220) et une section supérieure (221), chacune desdites sections comportant des moyens de rainure de guidage (222), des moyens de fixation (230) du tube (11) ainsi qu'une chambre d'introduction de fluide (223), seule la section inférieure (220) comportant un orifice (224) apte à mettre en liaison ladite chambre d'alimentation de fluide (24) avec ladite chambre d'introduction de fluide (223) ainsi que des moyens (225, 226,227) assurant l'étanchéité de ladite chambre d'introduction de fluide (223).

4. Dispositif de pose selon la revendication 3, **caractérisé en ce que** la cassette (2) comprend un logement (23) apte à recevoir l'insert (22).

5. Dispositif de pose selon l'une des revendications précédentes, **caractérisé en ce que** la cassette (2) comprend plusieurs moyens d'introduction (26) et de guidage (222) permettant la pose simultanée de plusieurs éléments (10).

6. Dispositif de pose selon l'une des revendications précédentes, **caractérisé en ce que** le corps d'entraînement (3) comprend un bâti (30) comprenant deux axes parallèles (31 ,32) disposés perpendiculairement à l'axe de pose, chacun desdits axes portant une roue (35,36), l'un desdits axes (31) étant motorisé, des moyens de réglage (34) de l'écartement desdits axes, respectivement desdites roues, étant prévus pour ajuster l'écartement desdites roues au diamètre de l'élément longiligne (10) à poser après que ledit corps d'entraînement (3) ait été assemblé à la cassette (2).

7. Dispositif de pose selon la revendication 6, **caractérisé en ce que** le moyen de réglage d'écartement des axes comprend une portion mobile portant l'un des axes (32), la position d'écartement de ladite portion mobile étant réglable par un moyen vis/boulon (34).

8. Dispositif de pose selon l'une des revendications précédentes, **caractérisé en ce qu'**il comprend un moyen de verrouillage de cassette comprenant notamment un levier pivotant (33) apte à verrouiller la cassette (2) lorsqu'elle est installée sur le corps d'entraînement (3).

9. Dispositif de pose selon la revendication 6, **caractérisé en ce que** l'axe motorisé (31) porte un limiteur de couple (38) à couple réglable ou fixe.

10. Dispositif de pose selon la revendication 6, **caractérisé en ce que** l'un des axes (32) comporte un moyen apte à fournir une impulsion (320) permettant de fournir une indication de vitesse et/ou de longueur de pose.

11. Dispositif de pose selon la revendication 6, **caractérisé en ce qu'**au moins une des roues d'entraînement (35,36) porte un bandage mou.

12. Dispositif de pose selon la revendication 6, **caractérisé en ce qu'**il comprend un moyen de sécurité (5) comprenant un volet rabattable (50) apte à cacher au moins une des roues (35,36) en rotation.

13. Dispositif de pose selon l'une des revendications précédentes, **caractérisé en ce que** la cassette (2) est apte à recevoir simultanément deux corps d'entraînement (3) disposés l'un derrière l'autre.

## Claims

1. A device for laying a long slender element (10) by introducing into a tube (11), comprising introduction (26) and guiding (222) means, mechanical means (35, 36) for pushing said long slender element into said device, as well as means (223) for introducing said long slender element into said tube, the introduction (26) and guiding (222) means, the means (223) for introducing said long slender element into said tube consist of a cassette (2) while the mechanical pushing means (35, 36) are part of a driving body (3), said cassette (2) and said driving body (3) consisting of two independent elements capable of being assembled for laying said long slender element, **characterized in that** the cassette (2) consisting of two similar portions (20, 21) is symmetrical relatively to a central plane containing the longitudinal axis through which said long slender element (10) passes and separating both said portions (20, 21), said cassette having a side notch (25) for mounting the driving body (3), the cassette (2) being thus able to be installed on the element to be laid, having its side notch (25) positioned on the left or on the right of the element to be laid relatively to the passing direction of said element to be laid, the driving body (3) being able to be mounted on the side of the cassette where said notch is located.

2. The laying device according to claim 1, **characterized in that** the driving body (3) further comprises means (4) for providing and supplying bearing fluid, feeding a fluid supply chamber (24) made in said cassette (2).

3. The laying device according to claim 2, **characterized in that** the cassette (2) comprises an insert (22) including a lower section (220) and an upper section (221), each of said sections including guiding groove means (222), means (230) for attaching the tube (11) as well as a chamber (223) for introducing fluid, only the lower section (220) including an orifice (224) able to connect said fluid supply chamber (24) with said fluid introduction chamber (223) as well as means (225, 226, 227) ensuring the seal of said fluid introduction chamber (223).

4. The laying device according to claim 3, **characterized in that** the cassette (2) comprises a housing (23) capable of receiving the insert (22).

5. The laying device according to one of the preceding claims, **characterized in that** the cassette (2) comprises several introduction (26) and guiding (222) means allowing simultaneous laying of several elements (10).

6. The laying device according to one of the preceding claims, **characterized in that** the driving body (3) comprises a frame (30) comprising two parallel axes (31, 32) positioned perpendicularly to the laying axis, each of said axes bearing a wheel (35, 36), one of said axes (31) being motor-driven, means (34) for adjusting the distance between said axes, said wheels respectively, being provided for adjusting the distance between said wheels to the diameter of the long slender element (10) to be laid after said driving body (3) has been assembled to the cassette (2).

7. The laying device according to claim 6, **characterized in that** the means for adjusting the distance between the axes comprises a mobile portion bearing one of the axes (32), the spaced apart position of said mobile portion being adjustable by a screw/bolt means (34).

8. The laying device according to one of the preceding claims, **characterized in that** it comprises a cassette locking means notably comprising a pivoting lever (33) able to lock the cassette (2) when it is installed on the driving body (3).

9. The laying device according to claim 6, **characterized in that** the motor-driven axis (31) bears a torque limiter (38) with an adjustable or set torque.

10. The laying device according to claim 6, **characterized in that** one of the axes (32) includes a means able to provide a pulse (320) with which a speed and/or laying length indication may be provided.

11. The laying device according to claim 6, **characterized in that** at least one of the driving wheels (35, 36) bears a soft tread.

12. The laying device according to claim 6, **characterized in that** it comprises a safety means (5) comprising a flap (50) which may be folded back, capable of concealing at least one of the rotating wheels (35, 36).

13. The laying device according to one of the preceding claims, **characterized in that** the cassette (2) is capable of simultaneously receiving two driving bodies (3) positioned one behind the other.

## Patentansprüche

1. Verlegungsvorrichtung eines langgestreckten Elements (10) durch Einführen in ein Rohr (11), die Einführungs- (26) und Lenkungsmittel (222), mechanische Schubmittel (35, 36) des langgestreckten Elements in die Vorrichtung sowie Einführungsmittel (223) des langgestreckten Elements in das Rohr umfasst, wobei die Einführungs- (26) und Lenkungsmittel (222), die Einführungsmittel (223) des langgestreckten Elements in das Rohr von einer Kassette (2) gebildet werden, wogegen die mechanischen Schubmittel (35, 36) Teil eines Antriebskörpers (3) sind, wobei die Kassette (2) und der Antriebskörper (3) von zwei unabhängigen Elementen gebildet werden, die imstande sind, für die Verlegung des langgestreckten Elements verbunden zu sein, **dadurch gekennzeichnet, dass** die Kassette (2), die aus zwei identischen Abschnitten (20, 21) besteht, relativ zu einer zentralen Ebene symmetrisch ist, die die Längsachse enthält, durch die das langgestreckte Element (10) verläuft, und die zwei Abschnitte (20, 21) trennt, wobei die Kassette einen seitlichen Ausschnitt (25) für die Montage des Antriebskörpers (3) aufweist, wobei damit die Kassette (2) imstande ist, mit ihrem seitlichen Ausschnitt (25) links oder rechts des zu verlegenden Elements, angeordnet relativ zur Durchgangsrichtung des zu verlegenden Elements, auf dem zu verlegenden Element installiert zu sein, wobei der Antriebskörper (3) imstande ist, auf der Seite der Kassette montiert zu sein, wo sich der Ausschnitt befindet.

2. Verlegungsvorrichtung nach Anspruch 1, **dadurch gekennzeichnet, dass** der Antriebskörper (3) ferner Mittel zur Lieferung und Versorgung mit Mitnehmerfluid (4) umfasst, die eine Fluidversorgungskammer (24) versorgen, die in der Kassette (2) ausgebildet ist.

3. Verlegungsvorrichtung nach Anspruch 2, **dadurch gekennzeichnet, dass** die Kassette (2) einen Einsatz (22) umfasst, der einen unteren Abschnitt (220) und einen oberen Abschnitt (221) aufweist, wobei jeder Abschnitt rillenartige Führungsmittel (222), Befestigungsmittel (230) des Rohrs (11) sowie eine Fluideinleitungskammer (223) aufweist, wobei nur der untere Abschnitt (220) eine Öffnung (224) umfasst, die imstande ist, die Fluidversorgungskammer (24) mit der Fluideinleitungskammer (223) in Verbindung zu setzen, sowie Mittel (225, 226, 227), die die Dichtigkeit der Fluideinleitungskammer (223) absichern.

4. Verlegungsvorrichrung nach Anspruch 3, **dadurch gekennzeichnet, dass** die Kassette (2) eine Aufnahme (23) umfasst, die imstande ist, den Einsatz (22) aufzunehmen.

5. Verlegungsvorrichtung nach einem der vorangehenden Ansprüche, **dadurch gekennzeichnet, dass** die Kassette (2) mehrere Einführungs- (26) und Lenkungsmittel (222) umfasst, die das gleichzeitige Verlegen von mehreren Elementen (10) erlaubt.

6. Verlegungsvorrichtung nach einem der vorangehenden Ansprüche, **dadurch gekennzeichnet, dass** der Antriebskörper (3) einen Rahmen (30) umfasst, der zwei parallele Wellen (31, 32) umfasst, die senkrecht zur Achse der Verlegung angeordnet sind, wobei jede der Wellen ein Rad (35, 36) trägt, wobei eine der Wellen (31) motorisiert ist, wobei Einstellungs- (34) und Beabstandungsmittel der Wellen beziehungsweise der Räder vorgesehen sind, um den Abstand der Räder an den Durchmesser des zu verlegenden langgestreckten Elements (10) anzupassen, nachdem der Antriebskörper (3) mit der Kassette (2) verbunden wurde.

7. Verlegungsvorrichtung nach Anspruch 6, **dadurch gekennzeichnet, dass** das Mittel zum Einstellen des Abstands der Wellen einen bewegbaren Abschnitt umfasst, der eine der Wellen (32) trägt, wobei die Beabstandungsposition des bewegbaren Abschnitts von einer Schraube/Bolzen (34) einstellbar ist.

8. Verlegungsvorrichtung nach einem der vorangehenden Ansprüche, **dadurch gekennzeichnet, dass** sie eine Kassettenverriegelungsvorrichtung umfasst, die vor allem einen schwenkenden Hebel (33) umfasst, der imstande ist, die Kassette (2) zu verriegeln, wenn sie auf dem Antriebskörper (3) installiert ist.

9. Verlegungsvorrichtung nach Anspruch 6, **dadurch gekennzeichnet, dass** die motorisierte Welle (31) einen Drehmomentbegrenzer (38) mit variablem oder unveränderlichem Drehmoment trägt.

10. Verlegungsvorrichtung nach Anspruch 6, **dadurch gekennzeichnet, dass** eine der Wellen (32) ein Mittel aufweist, das imstande ist, einen Impuls (320) zu liefern, der es erlaubt, eine Geschwindigkeits- und/oder Verlegungslängenangabe zu liefern.

11. Verlegungsvorrichtung nach Anspruch 6, **dadurch gekennzeichnet, dass** mindestens eines der Antriebsräder (35, 36) eine weiche Bandage trägt.

12. Verlegungsvorrichtung nach Anspruch 6, **dadurch gekennzeichnet, dass** sie ein Sicherheitsmittel (5) umfasst, das eine klappbare Klappe (50) umfasst, die imstande ist, mindestens eines der rotierenden Räder (35, 36) zu verdecken.

13. Verlegungsvorrichtung nach einem der vorangehenden Ansprüche, **dadurch gekennzeichnet, dass** die Kassette (2) imstande ist, zwei hintereinander angeordnete Antriebskörper (3) gleichzeitig aufzunehmen.
